# EUROPÄISCHE PATENTSCHRIFT

(11) **EP 0 319 801 B1**
(45) Veröffentlichungstag und Bekanntmachung des Hinweises auf die Patenterteilung: **09.03.1994**
(21) Anmeldenummer: 88119708.1
(22) Anmeldetag: 25.11.1988
(51) Int. Cl.: C08J 3/03, B01F 17/42

(54) **Suspendiermittel für Kunststoffpulver**
Dispersing agent for synthetic resin powder
Agent de suspension pour poudres de résine synthétique

(30) Priorität: 26.11.1987 DE 3740155
(43) Veröffentlichungstag der Anmeldung: 14.06.1989
(73) Patentinhaber: DR. TH. BÖHME KG CHEM. FABRIK GMBH & CO., D-82538 Geretsried (DE)
(72) Erfinder: Balbach, Günther, Dr., D-8190 Wolfratshausen (DE); Döcker, Horst, D-8192 Geretsried 2 (DE)
(74) Vertreter: Fehners, Klaus Friedrich, Dipl.-Ing., Dipl.-Wirtsch.-Ing.

(56) Entgegenhaltungen:
- EP-A- 0 013 244
- EP-A- 0 153 679
- DE-A- 2 407 505
- DE-B- 1 117 867
- FR-A- 2 204 643

## Beschreibung

Die Erfindung betrifft ein Suspendiermittel zur Herstellung von stabilen wässrigen Kunststoffdispersionen für Beschichtungszwecke.

Die Herstellung von stabilen, wässrigen Kunststoffpulver-Sekundärdispersionen, ausgehend von den wasserunlöslichen Kunststoffpulvern, wird seit langem für die verschiedensten Zwecke durchgeführt. In der IT-PS 301 282 wird bereits die Verwendung verschiedener wasserlöslicher Polymerer, beispielsweise die Verwendung von Salzen polymerer Carbonsäuren für die Dispergierung von Kunststoffpulvern in Wasser beschrieben. Die Salze der polymeren Carbonsäuren bewirken dabei eine bessere Benetzung der Kunststoffoberflächen und durch die erzielte Viskositätserhöhung wird eine Sedimentation der Kunststoffpulver weitgehend verhindert. Wie in der DE-AS 1 242 858 beschrieben, kann dieses bekannte Verfahren zur Stabilisierung von Sekundärdispersionen weiter verbessert werden, wenn als Suspendiermittel die Copolymerisate der Acryl- und Metacrylsäure mit Acrylamid verwendet werden. Die so erhaltenen Sekundärdispersionen sind zwar als lagerstabil zu bezeichnen, sie entsprechen jedoch nicht den hohen Anforderungen an die Entmischungsbeständigkeit, welche für das Aufbringen mittels moderner Auftragsaggregate bei hoher Laufgeschwindigkeit auf Substrate verlangt werden. Die wässrigen Kunststoffdispersionen werden dabei in der Regel auf ein Substrat als Schicht, als Streifen odr als eine Vielzahl diskreter Punkte aufgebracht. Dies geschieht üblicherweise durch Aufstreichen mit einer Rakel, durch Beschichten mittels Walzen, durch Aufsprühen, durch Tiefdruck oder durch Rotationssiebdruck. Neben einer erforderlichen Stabilität der wässrigen Kunststoffdispersion, die als Paste verarbeitet wird, ist dabei auch notwendig, daß die Paste nach dem Auftragen nicht in das Substrat eindringt oder gar auf die andere Seite eines beispielsweise textilen Substrates durchschlägt.

Eine Verbesserung der Stabilität und der Verarbeitbarkeit der wässrigen Kunststoffdispersionen läßt sich dadurch erreichen, daß zu den Salzen polymerer Carbonsäuren zusätzlich freie Fettsäuren in feinst verteilter Form mit in die Kunststoffpaste eingearbeitet werden. Dieses Verfahren ist in den DE-PSen 2 007 971 und 2 229 308 beschrieben.

Sämtliche für die vorgenannten Zwecke verwendbaren Suspendiermittel sind anionenaktiv. Eine gewünschte Wasserfestigkeit der fertigen Beschichtungen wird durch die Verwendung von Salzen leichtflüchtiger Basen erreicht, die beim Trocknungsprozeß verdampfen und dabei die unlösliche Säure des aktiven anionischen Molekülteils des Salzes zurücklassen.

Die Verwendung dieser leichtflüchtigen Basen bei der Herstellung der wässrigen Kunststoffdispersionen ist jedoch sehr problematisch, da Ammoniak und insbesondere die niedrig siedenden organischen Basen sehr toxisch sind. Beispielsweise ergibt sich aus der MAK-Liste der Deutschen Forschungsgemeinschaft für Ammoniak ein Wert von 50 ppm, für Morpholin von 20 ppm, für Methylamin und Trimethylamin von 10 ppm. Da es unvermeidlich ist, daß diese Basen beim Umgang mit den wässrigen Kunststoffdispersionen in die Luft des Arbeitsraumes gelangen, bzw. bei ihrem bestimmungsgemäßen Gebrauch als Beschichtung zur Film- bzw. Kleberpunktbildung erhitzt und dadurch mit der Abluft der Heizkanäle ins Freie geblasen werden, ergeben sich daraus erhebliche Umweltprobleme. Zur Verhinderung derselben müßten sehr teure und aufwendige Abgasreinigungsanlagen installiert werden.

Demgemäß liegt der Erfindung die Aufgabe zugrunde, ein Suspendiermittel für die Herstellung von stabilen wässrigen Kunststoffdispersionen zu schaffen, das einerseits die vielfältigen Anforderungen für die Beschichtungszwecke erfüllt und andererseits umweltfreundlich ist.

Ein diese Aufgabe lösendes Suspendiermittel ist in den Patentansprüchen gekennzeichnet.

Es wurde überraschenderweise festgestellt, daß ethoxilierte Fettalkohole, die nur wenig polar sind, zur Stabilisierung von wässrigen Sekundärdispersionen in ausgezeichneter Weise einsetzbar sind.

Die Fettalkoholderivate können dabei in geschmolzenem Zustand ohne weitere Zusätze in Wasser emulgiert werden und bilden beim Abkühlen stabile Dispersionen, deren Viskosität von dem Mischungsverhältnis des Ethoxilates mit Wasser abhängt. Besonders günstig für die Herstellung von wässrigen Kunststoffdispersionen ist es, wenn man das Wasser vor der Emulgierung der ethoxilierten Fettalkohole mit handelsüblichen Verdickern auf Basis wasserlöslicher Polymerer versetzt und damit eine höhere Ausgangsviskosität erzeugt. Die Vorteile des Arbeitens mit den nichtionogenen ethoxilierten Fettalkoholen als Suspendiermittel bleiben durch die Auswahl nichtionogener Verdicker wie beispielsweise Hydroxyethylcellulose oder Polyvinylpyrrolidon erhalten. Die Kombination von dispergierten, ethoxilierten Fettalkoholen mit nichtionogenen wasserlöslichen Verdickern erlaubt relativ niedrige Verdickerzusätze zur Stabilisierung der wässrigen Kunststoffdispersionen und hilft,ein Einsinken und Durchschlagen der Kunststoffpaste durch textile Substrate zu vermeiden. Auch werden besonders gute Laufeigenschaften der Kunststoffpasten erhalten, wenn teilweise Polyvinylpyrrolidon oder dessen Mischpolymere als Verdicker verwendet werden.

Erfindungsgemäß besteht das Suspendiermittel für die Herstellung stabiler, wässriger Kunststoffdispersionen aus einer Kombination von in Wasser dispergierten Umsetzungsprodukten von Ethylenoxid mit Fettalkoholen der allgemeinen Formel:

Cₙ H₂ₙ₊₁ (-O-CH₂-CH₂)ₘ-OH

wobei
- n: = 16 - 22
- m: = 1 - 5
ist,
in einer Konzentration von 1-5 Gewichtsprozent mit in Kombination wasserlöslichen nichtionogenen Polymeren in einer Konzentration von 0,5-3 Gewichtsprozent.

Vorzugsweise ist mindestens die Hälfte des zugesetzten Polymeren ein Polyvinylpyrrolidon oder ein Copolymerisat mit mindestens 75 Gewichtsprozent Vinylpyrrolidonanteil.

In diesem Suspendiermittel können Kunststoffpulver, wie sie zur Herstellung von Schmelzkleberdispersionen verwendet werden, ohne Schwierigkeiten durch einfaches Rühren verteilt werden. Solche Kunststoffpulver sind z. B.Copolyamidpulver, Pulver thermoplastischer Polyester oder Polyolefinpulver. Die Korndurchmesser der Kunststoffpulver liegen zwischen 0,5 µm - 100 µm.

Auch sind Suspendiermittelkonzentrate herstellbar, die erst unmittelbar vor ihrer Verwendung mit Wasser auf die obengenannten Konzentrationen verdünnt werden. Nach dem Verdünnen erhält man dann wieder eine Flüssigkeit der obengenannten Zusammensetzung, die das eigentliche Suspendiermittel darstellt.

Die Zusätze Kunststoffpulver betragen üblicherweise 30 bis 40 Gewichtsprozent, berechnet auf das Fertiggewicht der Dispersion. Damit erhält man eine pastöse Masse, die sich zu Beschichtungszwekken eignet.

Die so hergestellten Kunststoffpasten zeigen eine gute Wasserretention, d. h. sie neigen nicht zum Trockenlaufen bei der Verarbeitung. Dies ist ein entscheidender Vorteil, da bei allen Applikationsarten in den Kunststoffpasten hohe Scherkräfte auftreten. Durch diese "Pumpbewegungen" wird Wasser aus der Kunststoffdispersion ausgepreßt. Dadurch steigt die Viskosität, die Kräfte bei der "Pumpbewegung" werden größer und der Wasseraustritt wird verstärkt, bis eine feste krümelige Masse zurückbleibt, die für Beschichtungszwecke unbrauchbar ist. Dieser Nachteil wird durch die erfindungsgemäßen Suspendiermittel verhindert. Auch sinken die mit den Kunststoffpasten erzeugten Beschichtungen nicht in das textile Substrat ein, obwohl sie so niedrigviskos sind, daß sie mittels einer Pumpe gefördert und filtriert werden können und die Beanspruchung der Maschinenteile durch die Viskosität der zu verarbeitenden Kunststoffdispersion nicht zu hoch ist. Die mit den erfindungsgemäßen Suspendiermitteln hergestellten Kunststoffpasten zeigen eine gute Selbstglättung der Oberfläche und die beschichteten Flächen weisen eine scharfe Begrenzungslinie auf.

Im folgenden wird die Erfindung anhand von Beispielen näher erläutert.

### Beispiel 1:

### Herstellung von Suspendiermittelkonzentraten:

a) 75,9 g Wasser werden gerührt und 2 g einer handelsüblichen löslichen Stärke eingestreut (z. B. Amijel VA 155). Es wird gerührt bis die Stärke sich glatt gelöst hat. Diese Lösung wird auf 60° C erhitzt. Parallel dazu werden 10 g eines Reaktionsproduktes von 1 mol Stearylalkohol mit 4 mol Ethylenoxid aufgeschmolzen. Die Schmelze wird der Stärkelösung zugesetzt und unter kräftigem Rühren abgekühlt. Es Ensteht eine stabile weiße Dispersion. Jetzt werden 3 g Polyvinylpyrrolidon von mittlerem Molekulargewicht (Mv = 38000 Dalton) gelöst in 9 g Wasser unter Rühren zugesetzt. Da die Masse sehr schaumig ist, wird ein handelsüblicher Siliconentschäumer zugegeben (2 g Entschäumer EN).
b) 70 g Wasser werden gerührt und mit 2 g einer 30-%igen Aufschlämmung von Polyacrylsäure in Wasser gemischt. Dann werden 0,3 g 25-%ige Ammoniaklösung in Wasser zugesetzt. Die Lösung wird hochviskos. Es wird gerührt bis eine gleichmäßige Verteilung des entstehenden polyacrylsauren Salzes erreicht ist. Dann wird die Mischung auf 60° C erhitzt. Parallel dazu werden 9 g eines Reaktionsproduktes von 1 mol Behenylalkohol mit 3 mol Ethylenoxid aufgeschmolzen. Die Schmelze wird in die warme wässrige Lösung des polyacrylsauren Salzes gegeben und die Mischung unter starkem Rühren abgekühlt. Dann werden 17 g einer handelsüblichen, 30-%igen wässrigen Lösung eines Copolymerisates von Vinylpyrrolidon mit wenig Vinylpropionat zugesetzt und gleichmäßig verrührt. Da die Masse sehr schaumig ist, werden 2 g eines handelsüblichen Siliconentschäumers zugegeben.

### Beispiel 2:

25 g des Konzentrates aus Beispiel 1 a) werden mit 40 g Wasser gemischt. Es entsteht ein erfindungsgemäßes Suspendiermittel. Unter Rühren werden 35 g eines Terpolyamidpulvers eingestreut. Das Terpolyamid enthält die Monomeren Caprolactam, Adipinsäure, Hexamethylenamin und Laurinlactam in einem solchen Mischungsverhältnis, daß ein Schmelzbereich von 110° C bis 120° gegeben ist. Das Pulver enthält die Siebfraktion 0 - 80 µm. Während des Einstreuens wird das Rühren fortgesetzt. Es entsteht eine glatte, mittelviskose Paste, die auch bei längerem Stehen kein Sediment bildet.

### Beispiel 3:

25 g des Konzentrates aus Beispiel 1 b)werden mit 40 g Wasser gemischt. Es entsteht ein erfindungsgemäßes Suspendiermittel. Unter Rühren werden 35 g eines Terpolyamidpulvers eingestreut. Das Terpolyamid enthält die Monomeren Caprolactam, Adipinsäure, Hexamethylendiamin und Laurinlactam in einem solchen Mischungsverhältnis, daß ein Schmelzbereich von 110° C bis 120° C gegeben ist. Das Pulver enthält die Siebfraktion 0 - 80 µm. Während des Einstreuens wird das Rühren fortgesetzt. Es entsteht eine glatte, mittelviskose Paste, die auch bei längerem Stehen kein Sediment bildet.

### Beispiel 4:

25 g des Konzentrates aus Beispiel 1 a) werden mit 40 g Wasser gemischt. Es entsteht ein erfindungsgemäßes Suspendiermittel. Unter Rühren werden 40 g eines Polyesterpulvers eingestreut. Der Polyester ist ein Thermoplast aus Butandiol und Dicarbonsäuren mit einem Schmelzpunkt von ca. 116°C. Das Pulver enthält die Siebfraktion 0 - 80 µm. Während des Einstreuens wird das Rühren forgesetzt. Es entsteht eine glatte, mittelviskose Paste, die auch bei längerem Stehen kein Sediment bildet.

### Beispiel 5:

25 g des Konzentrates aus Beispiel 1 b) werden mit 40 g Wasser gemischt. Es entsteht ein erfindungsgemäßes Suspendiermittel. Unter Rühren werden 40 g eines Polyesterpulvers eingestreut. Der Polyester ist ein Thermoplast aus Butandiol und Dicarbonsäuren mit einem Schmelzpunkt von ca. 116° C. Das Pulver enthält die Siebfraktion 0 - 80 µm. Während des Einstreuens wird das Rühren fortgesetzt. Es entsteht eine glatte, mittelviskose Paste, die auch bei längerem Stehen kein Sediment bildet.

### Beispiel 6:

25 g des Konzentrates aus Beispiel 1 a) werden mit 40 g Wasser gemischt. Es entsteht ein erfindungsgemäßes Suspendiermittel. Unter Rühren werden 32 g eines Hochdruckpolyethylenpulvers der Korngröße 5 - 74 µm eingestreut. Während des Einstreuens wird das Rühren fortgesetzt. Es entsteht eine glatte, mittelviskose Paste, die auch bei längerem Stehen kein Sediment bildet.

### Beispiel 7:

25 g des Konzentrates aus Beispiel 1 b) werden mit 40 g Wasser gemischt. Es entsteht ein erfindungsgemäßes Suspendiermittel. Unter Rühren werden 32 g eines Hochdruckpolyethylenpulvers der Korngröße 5 - 74 µm eingestreut. Während des Einstreuens wird das Rühren fortgesetzt. Es entsteht eine glatte, mittelviskose Paste, die auch bei längerem Stehen kein Sediment bildet.

### Beispiel 8:

Die in Beispiel 2 - 5 hergestellten wässrigen Dispersionen werden mit Hilfe einer Rotationssiebdruck-Beschichtungsanlage unter Verwendung des Schablonentyps "mesh 25" mit ca. 118 Löchern pro cm² und einem Lochdurchmesser von 0,4 mm auf Polyesterfaservlies gedruckt. Die Trocknung des Druckes erfolgt in einem Umluftkanal bei 150° C. Die Aufenthaltzseit im Kanal beträgt ca. 1 Minute. Es werden scharf begrenzte Punkte erhalten, die auf der Oberfläche des Vliesstoffes haften,jedoch nicht durch den Vliesstoff durchschlagen. Auch bei längerer Laufzeit der Maschine treten keine Entmischungserscheinungen in der Paste auf. Mit den erhaltenen bedruckten Vliesen wurden Kaschierversuche durchgeführt, die ihre Brauchbarkeit als Einbügelstoffe für die Konfektion bewiesen.

### Beispiel 9:

Mit den Pasten aus Beispiel 6 und 7 werden mit Hilfe eines Reserve Roll Coaters Beschichtungen auf eine Papierbahn aufgebracht. Die aufgetragene Menge beträgt 100 g/m², so daß nach der Verdampfung des Wassers eine Auflage von ca. 37 g/m² erhalten werden, wovon ca. 33 g Polyethylen sind. Die Hauptmenge des in der Dispersion enthaltenen Wassers wird in einem Kanal bei 120° C verdampft. In einem darauffolgenden Feld von Infrarotstrahlern wird das Polyethylen über seinen Schmelzpunkt erhitzt. Eine Messung der Oberflächentemperatur ist nicht möglich. Die Temperatur und damit der Verschmelzungsgrad des Polyethylens wird durch den Abstand der Strahler von der beschichteten Oberfläche reguliert. Unmittelbar nach dem Strahlerfelgt folgt eine wassergekühlte polierte Metallwalze auf der Beschichtungsseite. Die Ware wird von einer Hartgummiwalze (Härte 96° Shore) auf die Kühlwalze gepreßt. Es entsteht eine porenfreie Beschichtung. Das Papier zeigt eine erhöhte Reißfestigkeit und Falzbeständigkeit. Es ist heißsiegelfähig.

## Patentansprüche

1. Suspendiermittel für Kunststoffpulver für die Herstellung stabiler wässriger Kunststoffdispersionen,
**gekennzeichnet durch**
einen Gehalt von 1 - 5 Gewichtsprozent der Reaktionsprodukte von Fettalkoholen mit Ethylenoxid der allgemeinen Formel
Cₙ H₂ₙ₊₁ (-O-CH₂-CH₂)ₘ-OH, wobei
n = 16 - 22
m = 1 - 5
bedeuten,
in Kombination mit 0,5 - 3 Gewichtsprozent wasserlöslicher, nichtionogener Polymerer mit Verdickerwirkung.

2. Suspendiermittel nach Anspruch 1, **dadurch gekennzeichnet,** daß mindestens die Hälfte der eingesetzten Menge der wasserlöslichen, nichtionogenen Polymerer Polyvinylpyrrolidon oder ein Copolymerisat mit mindestens 75 Gewichtsprozent Vinylpyrrolidonanteil ist.

## Claims

1. Dispersing agent for synthetic resing powder for the production of stable aqueous synthetic resin dispersions, characterized by a content of 1 - 5 % by weight of the reaction products of fat alcohols with ethylene oxide of the general formula:
CₙH₂ₙ₊₁ (-O-CH₂-CH₂)ₘ-OH
where
n = 16 - 22
m = 1 - 5
in combination with 0.5 - 3 % by weight of water-soluble nonionic polymers with a thickening effect.

2. Dispersing agent as claimed in claim 1, characterized in that at least half of the quantity of water-soluble nonionic polymers used is polyvinyl pyrrolidone or a copolymerisate with a proportion of at least 75 % by weight of vinyl pyrrolidone.

## Revendications

1. Composition de mise en suspension pour matière synthétique en poudre, permettant de produire des dispersions aqueuses stables de matière synthétique, caractérisée par une teneur de 1 à 5 % en poids en produits de réaction d'alcools gras avec l'oxyde d'étylène, de formule générale
CₙH₂ₙ₊₁ (-O-CH₂-CH₂)ₘ-OH,
où
n a une valeur de 16 à 22
m a une valeur de 1 à 5
en association avec 0,5 à 3 % en poids de polymères hydrosolubles non ionogènes à action épaississante.

2. Composition de mise en suspension suivant la revendication 1, caractérisee en ce que la moitié au moins de la quantité utilisée de polymères hydrosolubles non ionogènes consiste en polyvinylpyrrolidone ou en un copolymère avec une proportion de vinylpyrrolidone d'au moins 75 % en poids.
